# EUROPEAN PATENT SPECIFICATION

(11) **EP 3 630 654 B1**
(45) Date of publication and mention of the grant of the patent: **20.07.2022**
(21) Application number: 18720378.1
(22) Date of filing: 23.04.2018
(51) Int. Cl.: B65G 1/00

(54) **METHOD FOR TRANSPORTING AND STORING CERAMIC SLABS**
VERFAHREN ZUM TRANSPORTIEREN UND AUFBEWAHREN VON KERAMISCHEN PLATTEN
PROCÉDÉ DE TRANSPORT ET DE STOCKAGE DE DALLES EN CÉRAMIQUE

(30) Priority: 30.05.2017 IT 201700058491
(43) Date of publication of application: 08.04.2020
(73) Proprietor: Granitifiandre Societa' Per Azioni, 42014 Castellarano (RE) (IT)
(72) Inventor: MARCHI, Domenico, 42031 Baiso (IT)
(74) Representative: Corradini, Corrado
(86) International application number: PCT/IB2018/052797
(87) International publication number: WO 2018/220452

(56) References cited:
- EP-A1- 2 191 744
- US-A- 2 639 050
- US-A- 3 151 754
- US-A- 3 269 565
- US-A- 4 571 141

## Description

### TECHNICAL FIELD

The present invention relates to a method for transporting and storing ceramic slabs.

### PRIOR ART

It is known in the ceramics industry to store large ceramic slabs (e.g. 1660 mm by 3260 mm or other) as semi-finished products that are stored for a certain period before being subjected to further processing, such as cutting into smaller tiles or others.

These ceramic slabs are usually transported in the working environment using special metal pallets which are capable of carrying groups of stacked plates, such as groups of 25 or more stacked ceramic slabs and forklifts capable of handling pallets each loaded with a group of stacked ceramic slabs.

In particular, the forklifts are capable of handling the pallets by tucking their lifting arms, or forks, into appropriate seats formed in the pallet itself.

With this known system, each group of slabs is stored together with its pallets on a shelf, stacking the groups of slabs vertically on top of each other on respective shelf rest planes.

A first problem of this technique is the fact that groups of stacked slabs are stored together with the respective pallet which supports them with the consequence that, in case there is an increase in production and thus of the semi-finished products, a larger number of pallets is required, resulting in additional costs.

A second drawback is that the storage of the groups of stacked slabs creates problems in terms of height of such groups of slabs, precisely because each group is associated with the respective pallet.

One object of the present invention is to overcome the above drawbacks of the prior art with a method for transporting and storing ceramic slabs that allows significant savings in the storage of semi-finished products.

A further object of the invention is to provide a method for transporting and storing ceramic slabs that allows to optimize the space occupied by the storage of slabs.

These objects are achieved by the features of the invention set forth in the independent claim. The dependent claims describe preferred and/or particularly advantageous aspects of the invention. US 4 571 141 A discloses a method according to the preamble of claim 1.

### DESCRIPTION OF THE INVENTION

An embodiment of the invention provides a method for transporting and storing ceramic slabs by means of a forklift, wherein the method comprises the following steps:
- bringing a pallet loaded with ceramic slabs on the vertical of a support group comprising a plurality of elements that extend vertically;
- lowering the pallet until the ceramic slabs remain supported by the support group;
- picking the ceramic slabs separated from the pallet;
- depositing the ceramic slabs on a shelf.

Thanks to this solution, each group of ceramic slabs is released from the pallet that supports it, thus making the same pallets immediately available for new tasks.

In this way, in fact, the pallets do not remain constrained to the respective group of ceramic slabs for as long as the latter remain in the semi-finished product warehouse.

Finally, this solution allows using shelves that, with the same vertical overall dimensions, can support a larger number of groups of ceramic slabs, thus reducing the overall dimensions in the work environment.

According to one aspect of the invention, the support group of the ceramic slabs comprises a plurality of columns that extend vertically.

One advantage of this solution is that the support group of the ceramic slabs is configured in such a way as to allow, on the one hand, supporting said slabs and on the other hand to release the pallet therefrom.

An embodiment of the invention provides that the forklift disengages from the pallet moving away from it.

This embodiment has the advantage due to the fact that it provides a pallet released from the ceramic slabs and that can therefore be used for other loads.

According to one aspect of the invention, a pick up group of the forklift is lifted up to a height slightly smaller than the height of the ceramic slabs when the ceramic slabs are supported by the support group.

An advantage of this embodiment is that it allows preparing the forklift to pick up the ceramic slabs released from the pallet.

According to one aspect of the invention, the pick up group of the forklift acts to lift the ceramic slabs by separating them from the support group.

An advantage of this embodiment is that in this way, only the ceramic slabs and not also the pallet, are transported to the shelving.

According to a further aspect of the invention, the ceramic slabs are placed on a supporting frame adapted to be interposed between said ceramic slabs and the support group.

An advantage of this embodiment is that the supporting frame allows handling the ceramic slabs protecting them from possible damage or abrasion.

According to one aspect of the invention, the steps of the method are carried out with the aid of an automatically driven forklift.

An advantage of this embodiment is that it allows automating the transport and storage operations of the ceramic slabs within the work environment. The invention also comprises a support group for ceramic slabs adapted to be used in the described method, wherein the support group comprises a plurality of mutually spaced vertical columns.

An advantage of this solution is that the support group is an aid to release the ceramic slabs from the pallet.

### BRIEF DESCRIPTION OF THE DRAWINGS

Further features and advantages of the invention will become apparent from the following description, provided by way of non-limiting example with the aid of the figures shown in the accompanying drawings.
Figure 1 shows a side view of a step of the method according to an embodiment of the invention;
figure 2 shows a front view of a support group for ceramic slabs used in the method of the present invention;
figure 2A shows an axonometric view of a pallet used in the method of the present invention;
figure 3 shows a top view of a further step of the method according to an embodiment of the invention; and
figures 4-11 show side views of subsequent steps of the method of the invention.

### BEST MODE OF CARRYING OUT THE INVENTION

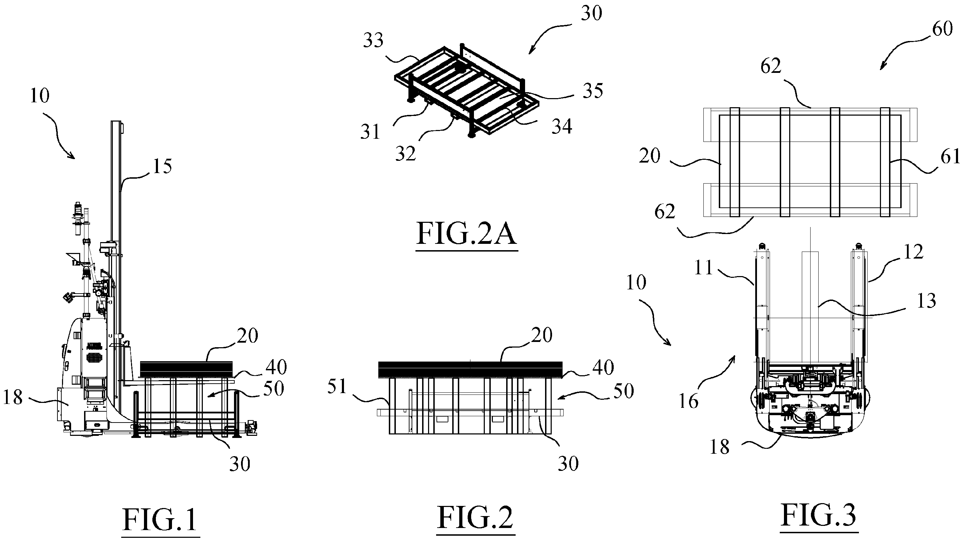

With special reference initially to figure 1, reference numeral 1 indicates as a whole an automatically driven forklift provided with a frame 18 on which vertical rods 15 are mounted which enable the sliding in vertical direction of a pick up group 16 comprising two lateral lifting arms 11, 12 and a central lifting arm 13. The central lifting arm 13 has the function of supporting the group of ceramic slabs preventing the bending and/or damage thereof due to their own weight.

Automatically driven forklifts are known per se and will not be described in more detail, it being sufficient to note that they may comprise a battery power supply, for example using a system of lithium batteries, and may be controlled by a software that allows them to follow pre-assigned paths, to avoid collisions with other vehicles in the work environment and to carry out load lifting, transportation and placement operations.

In particular, in addition to forklift 10, figure 1 also shows a group of ceramic slabs 20, placed on a supporting frame 40, a pallet 30 and a support group 50.

Figure 2 shows a front view of a support group 50 for ceramic slabs used in the method of the present invention.

Figure 2A shows an axonometric view of a pallet 30 used in the method of the present invention.

The pallet 30 is known per se and will be described herein only briefly.

It has a frame 33 that supports seats 31, 32 that can accommodate the lifting arms 11, 12 of the forklift 10.

The frame 33 of the pallet 30 is also coupled to connecting rods 34 forming spaces 35.

The support group 50 has a plurality of columns 51 fixed to the ground and preferably made of a metal material.

The spaces between columns 51 are such as to allow the passage of the lateral lifting arms 11, 12 and of the central lifting arm 13 of the pick up group 16 of the forklift 10.

Figure 3 shows a top view of a further step of the method according to an embodiment of the invention.

This figure shows, in particular, a shelf 60 in which a group of ceramic slabs 20 has been brought and deposited by the forklift 10.

The shelf 60 has longitudinal rods 61 spaced in such a way as to allow the passage of the lateral lifting arms 11, 12 and of the central lifting arm 13 of the forklift 10, longitudinal rods 61 connected to suitable uprights 62 that are part of the bearing structure of the shelf 60.

An embodiment of the method of the invention is described in more detail hereinafter, divided in its main steps.

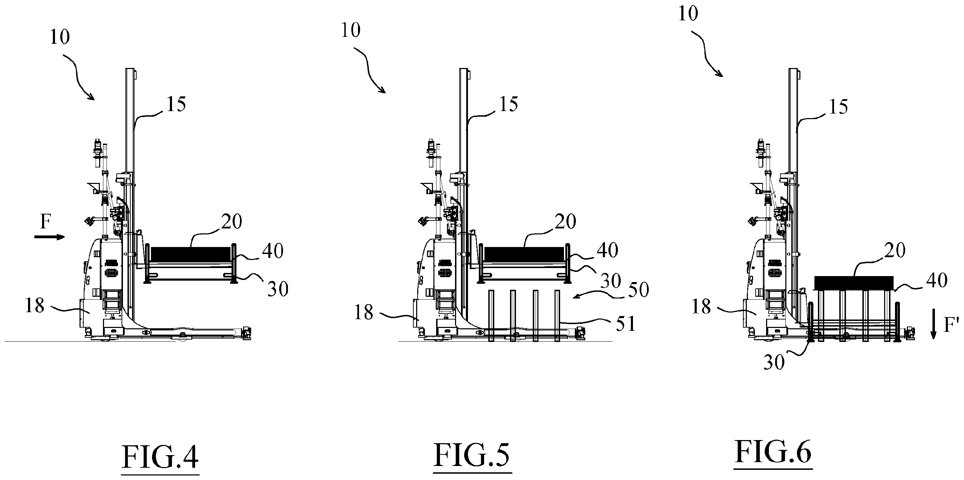

Figure 4 shows a first step of the method in which the forklift 10 carries (arrow F) a group of ceramic slabs 20 on a pallet 30. The ceramic slabs 20 are also placed on a supporting frame 40. The supporting frame 40 may be made of wood or other materials.

In a second step of the method, shown in figure 5, the ceramic slabs 20 are placed by the forklift 10 on the vertical of the support group 50 consisting of a plurality of columns 51 that extend vertically starting from the plane on which the forklift 10 moves.

In a third step of the method, shown in figure 6, the ceramic slabs 20, still placed on the pallet 30, are lowered by the forklift 10 to the support group 50. In this way, the supporting frame 40 of the group of ceramic slabs 20 encounters the columns 51 of the support group 50 so that the supporting frame 40 maintains the group of ceramic slabs 20 lifted.

Again in figure 6, it is seen how the pick up group 16 of the forklift 10 is lowered to bring the pallet 30 to the ground, thereby separating it from the group of ceramic slabs 20 in the direction of arrow F'.

In this step, the lifting arms 11, 12 of the forklift 10 are still inserted into the seats 31, 32 of the pallet 30 and the columns 51 are arranged in such a way as not to interfere with the connecting rods 34, but instead the pallet 30 can drop down to the ground using the spaces 35 between its connecting rods 34.

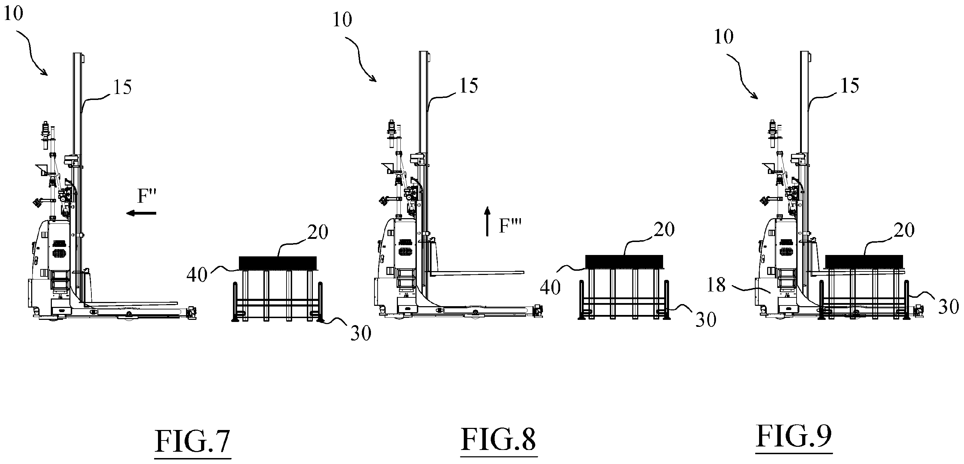

Figure 7 shows a fourth step of the method in which the forklift 10 moves away from the ceramic slabs 20 by moving back in the direction of arrow F".

Thereafter, in the fifth step of the method shown in figure 8, the lateral lifting arms 11, 12 and the central lifting arm 13 are lifted (arrow F‴) along the rods 15 of the forklift 10 to a height slightly lower than the height of the supporting frame 40 of the group of ceramic slabs 20.

In a sixth step of the method, shown in figure 9, the lateral lifting arms 11, 12 and the central lifting arm 13 are placed below and in contact with the supporting frame 40 of the group of ceramic slabs 20.

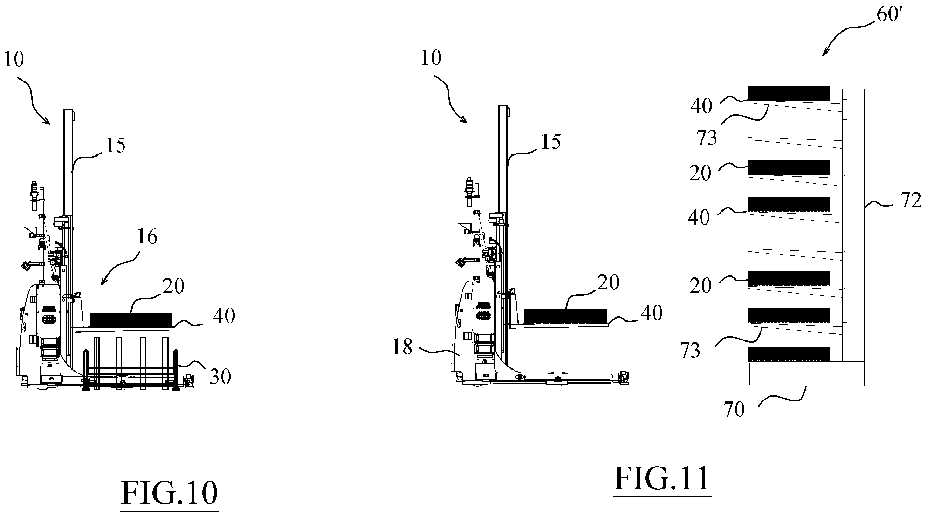

In a seventh step of the method, shown in figure 10, the ceramic slabs 20, placed on the supporting frame 40, are lifted with respect to the support group 50 by the forklift 10.

In the eighth and last step of the method, shown in figure 11, the group of ceramic slabs 20 is carried by the forklift 10 towards a shelf 60', in which it is deposited.

The shelf 60' is an alternate form with respect to the shelf 60 described with reference to figure 3 and is provided with a base 70 from which a column 72 branches off, supporting a plurality of cantilever elements 73 adapted to support respective groups of ceramic slabs 20.

At the same time, the pallet 30 is made available to be used for other loads. Several changes and variations may be made to the invention thus conceived, all falling within the scope of the inventive concept.

Moreover, all details can be replaced with other technically equivalent elements.

In practice, the materials used as well as the shapes and sizes may be any according to the requirements, without departing from the protection scope of the following claims.

## Claims

1. Method for transporting and storing ceramic slabs (20) by means of a forklift (10), wherein the method comprises the following steps:
- bringing a pallet (30) loaded with ceramic slabs (20) on the vertical of a support group (50) comprising a plurality of elements that extend vertically;
- lowering the pallet (30) until the ceramic slabs (20) remain supported by the support group (50);
- picking the ceramic slabs (20) separated from the pallet (30);
- depositing the ceramic slabs (20) on a shelf (60, 60'),
**characterized in that**
the forklift (10) has a pick up group (16) comprising two lateral lifting arms (11, 12) and a central lifting arm (13), and **in that**
the shelf (60, 60') has longitudinal rods (61) spaced in such a way as to allow the passage of the lateral lifting arms (11, 12) and of the central lifting arm (13) of the forklift (10).

2. Method according to claim 1, wherein the support group (50) of the ceramic slabs (20) comprises a plurality of columns (51) that extend vertically.

3. Method according to claim 1, comprising a step in which the forklift (10) disengages from the pallet (30) moving away from it.

4. Method according to claim 3, wherein a pick up group (16) of the forklift (10) is lifted up to a height slightly smaller than the height of the ceramic slabs (20) when the ceramic slabs (20) are supported by the support group (50).

5. Method according to claim 4, wherein the pick up group (16) of the forklift (10) acts to lift the ceramic slabs (20) by separating them from the support group (50).

6. Method according to claim 1, wherein the ceramic slabs (20) are placed on a supporting frame (40) adapted to be interposed between the ceramic slabs (20) and the support group (50).

7. Method according to one or more of the preceding claims, wherein the steps of the method are carried out with the aid of an automatically driven forklift (10).

## Patentansprüche

1. Verfahren zum Transportieren und Lagern von Keramikplatten (20) mittels eines Gabelstaplers (10), wobei das Verfahren die folgenden Schritte umfasst:
- Bringen einer mit Keramikplatten (20) beladenen Palette (30) auf die Vertikale einer Trägergruppe (50), umfassend eine Vielzahl von Elementen, die sich vertikal erstrecken;
- Absenken der Palette (30), bis die Keramikplatten (20) von der Trägergruppe (50) getragen werden;
- Aufnehmen der von der Palette (30) getrennten Keramikplatten (20);
- Ablegen der Keramikplatten (20) auf einem Regal (60, 60'),
**dadurch gekennzeichnet, dass**
der Gabelstapler (10) eine Aufnahmegruppe (16) aufweist, umfassend zwei seitliche Hubarme (11, 12) und einen mittleren Hubarm (13), und
dass das Regal (60, 60') Längsstangen (61) aufweist, die auf eine Weise beabstandet sind, um einen Durchgang der seitlichen Hubarme (11, 12) und des mittleren Hubarms (13) des Gabelstaplers (10) zu ermöglichen.

2. Verfahren nach Anspruch 1, wobei die Trägergruppe (50) der Keramikplatten (20) eine Vielzahl von Säulen (51) umfasst, die sich vertikal erstrecken.

3. Verfahren nach Anspruch 1, umfassend einen Schritt, bei dem sich der Gabelstapler (10) von der Palette (30) löst und sich davon entfernt.

4. Verfahren nach Anspruch 3, wobei eine Aufnahmegruppe (16) des Gabelstaplers (10) auf eine Höhe angehoben wird, die geringfügig kleiner ist als die Höhe der Keramikplatten (20), wenn die Keramikplatten (20) von der Trägergruppe (50) getragen werden.

5. Verfahren nach Anspruch 4, wobei die Aufnahmegruppe (16) des Gabelstaplers (10) wirkt, um die Keramikplatten (20) anzuheben, indem sie sie von der Trägergruppe (50) trennt.

6. Verfahren nach Anspruch 1, wobei die Keramikplatten (20) auf einem Tragrahmen (40) platziert werden, der angepasst ist, um zwischen den Keramikplatten (20) und der Trägergruppe (50) eingefügt zu werden.

7. Verfahren nach einem oder mehreren der vorherigen Ansprüche, wobei die Schritte des Verfahrens mit Hilfe eines automatisch angetriebenen Gabelstaplers (10) durchgeführt werden.

## Revendications

1. Procédé de transport et de stockage de dalles en céramique (20) au moyen d'un chariot élévateur (10), dans lequel le procédé comprend les étapes suivantes consistant à :
- amener une palette (30) chargée de dalles en céramique (20) sur la verticale d'un groupe de soutien (50) comprenant une pluralité d'éléments qui s'étendent verticalement ;
- abaisser la palette (30) jusqu'à ce que les dalles en céramique (20) soient soutenues par le groupe de soutien (50) ;
- ramasser les dalles en céramique (20) séparées de la palette (30) ;
- déposer les dalles en céramique (20) sur une étagère (60, 60'), **caractérisé en ce que** le chariot élévateur (10) comporte un groupe de préhension (16) comprenant deux bras de levage latéraux (11, 12) et un bras de levage central (13), et
**en ce que** l'étagère (60, 60') comporte des tiges longitudinales (61) espacées de manière à permettre le passage des bras de levage latéraux (11, 12) et du bras de levage central (13) du chariot élévateur (10).

2. Procédé selon la revendication 1, dans lequel le groupe de soutien (50) des dalles en céramique (20) comprend une pluralité de colonnes (51) qui s'étendent verticalement.

3. Procédé selon la revendication 1, comprenant une étape dans laquelle le chariot élévateur (10) se désengage de la palette (30) en s'éloignant de celle-ci.

4. Procédé selon la revendication 3, dans lequel un groupe de préhension (16) du chariot élévateur (10) est soulevé jusqu'à une hauteur légèrement inférieure à la hauteur des dalles en céramique (20) lorsque les dalles en céramique (20) sont supportées par le groupe de soutien (50).

5. Procédé selon la revendication 4, dans lequel le groupe de préhension (16) du chariot élévateur (10) agit pour soulever les dalles en céramique (20) en les séparant du groupe de soutien (50).

6. Procédé selon la revendication 1, dans lequel les dalles en céramique (20) sont placées sur un châssis de support (40) adapté de façon à être interposé entre les dalles en céramique (20) et le groupe de soutien (50).

7. Procédé selon une ou plusieurs des revendications précédentes, dans lequel les étapes du procédé sont réalisées à l'aide d'un chariot élévateur (10) à entraînement automatique.
